# EUROPEAN PATENT APPLICATION

(11) **EP 3 232 163 A2**
(43) Date of publication of application: **18.10.2017**
(21) Application number: 17275044.0
(22) Date of filing: 10.04.2017
(51) Int. Cl.: G01D 4/00, G01F 15/00, G08B 21/18, G08B 29/04, G01R 11/24, G01R 22/06

(54) **TAMPER DETECTION IN UTILITY METERS**

(30) Priority: 12.04.2016 US 201662321562 P; 10.08.2016 US 201615233627
(71) Applicant: Neptune Technology Group Inc., Tallassee, Alabama 36078 (US)
(72) Inventor: Hanes, David Jeremy, Alpharetta, GA 30005 (US); Sala, John Eugene, New Eagle, PA 15067 (US); Brennan, Jr, William James, Montgomery, AL 36117 (US); Wilson, Michael Allen, Tallassee, AL 36028 (US)
(74) Representative: Potter Clarkson LLP

(57) **Abstract**

Devices to detect utility theft are provided, as well as methods of their use. The devices are utility meters that have a positioning detector; a microprocessor connected to receive readings from the positioning detector; a memory storage device in communication with the microprocessor, and at least one power source to provide power to the microprocessor and the memory storage device. Combining positioning readings with theft detection algorithms allows increased accuracy in the automated detection of theft, even when grid power is not available to power the accelerometer or compass.

## Description

### CROSS-REFERENCE TO RELATED APPLICATIONS

This applications cites the benefit of the filing date of U.S. Pat. App. No. 62/321,562, filed 12 April 2016, which is pending. The contents of U.S. Pat. App. No. 62/321,562 are incorporated herein by reference in their entirety.

### BACKGROUND

### A. FIELD OF THE DISCLOSURE

The present disclosure relates generally to the detection of tampering with utility systems, specifically the detection of tampering with utility meters when the tampering is committed to cause the meter to read less than actual usage (i.e., utility theft). Such meters as well as methods for use therewith are provided.

### B. BACKGROUND

Utilities and other entities operate distribution systems for resources such as water, gas, and electricity to deliver those resources to various consumers connected to the distribution system. Typically, each consumer has at least one meter measuring the amount of the resource that it consumes. The utility operator charges the consumer a fee based upon consumption of the resource as measured by the meter during a given period of time.

Some unscrupulous consumers may attempt to avoid paying for the resources by tampering with the meter to cause it to read less than the actual usage, thereby reducing the fees charged by the utility. Common methods of such tampering may involve temporary removal or inversion of the meter. In some instances, if a consumer has a one-time large consumption event such as filling a pool with water, the consumer may attempt to avoid paying the full value of the resource consumed by simply removing the water meter from line. In this case, a large volume of water is removed from the distribution system without passing through the meter. Alternatively, a consumer may attempt to reduce its utility fees by temporarily inverting the meter such that the water (or other resource) runs through the meter in the reverse direction, thereby lowering the apparent consumption measured by the meter. In both of these cases, the meter is disconnected from the line and removed from its original position. These processes cannot be accomplished without at least a temporary change in either the direction or positioning of the meter. These changes in positioning reflect tampering events that may be measured by accelerometers or compasses.

Typically, theft is detected by a lower than normal reading for a given meter. Meter reading usually occurs on a periodic basis, often monthly. Therefore, the theft may not be detected until well after the meter has been replaced or restored to its correct positioning. Further complicating the identification of a theft event by the utility, an abnormally low reading may have other causes such as low or zero usage because the consumer is temporarily away. This combination of late detection and difficulty in identifying genuine reduced usage by the consumer makes it difficult for the utility to identify and confirm theft by a consumer. Therefore, a great deal of theft may go unprosecuted and the utility is left to absorb the cost of the lost resources.

More recently, metering systems have utilized wireless communications modules operatively connected to the meter itself, such that the communications module could report the meter reading electronically to a communications network. Such networks initially utilized a mobile communications device that a utility worker would use to more rapidly collect readings as he drove within range of the meters. Later, the networks included stationary receivers designed to receive messages from a designated set of meters within a certain range, or the communications modules on the meters are capable of communicating with each other and passing messages along to a module that is connected to a gateway to the larger network. Various network topologies and technologies exist in the prior art for transmitting meter readings from a communications module at the meter to a central data collection or processing unit. In these systems, the communications module at the meter might transmit a reading on a predetermined interval (a "bubble up" system), or the module might respond to a command to report a meter reading from the central host or a nearby receiver or collector. Such networks are known and understood by those of ordinary skill in the art and will not be discussed in further detail here. In any case, such communication systems offer the ability for near instantaneous transmission of meter readings from the meter itself back to the central host computer for compilation and analysis.

However, even with the ability to collect more frequent meter readings, either through a bubble-up system or command inquiry, the utility needs a reliable method to discriminate between genuine low-usage events and a theft event. Although meters with communications modules may be useful in obtaining more frequent meter readings, each network may contain tens of thousands of individual meters. Due to the energy demands of constantly transmitting meter readings, it is not practical to collect frequent meter readings for all meters in a system in an effort to detect theft as it is occurring.

There is a need to identify individual meters where a tampering event has occurred as a means of detecting theft. There is also a need to record evidence of tampering events so that they may be transmitted to the utility at the same time the meter reading is transmitted. There is a need to record evidence of tampering events so that such evidence may be offered in prosecution of consumers committing resource theft.

### SUMMARY

The problems in the art explained above, as well as others, are solved by the utility meters and methods provided in this disclosure. It is to be understood that not all uses and embodiments will address all such problems, and nothing claimed should be limited according to its ability to address such problems.

A tamper-detecting water meter is provided. A first general embodiment of the tamper-detecting water meter comprises: a positioning detector selected from the group consisting of an accelerometer and a digital compass; a microprocessor connected to receive readings from the sensor; a memory storage device in communication with the microprocessor; at least one power source to provide power to the microprocessor and the memory storage device; and a housing having an external geometry that prevents the water meter from resting on a flat surface in such a way that the water meter is substantially the same positioning as when installed.

A second general embodiment of the tamper-detecting utility meter comprises: a positioning detector selected from the group consisting of an accelerometer and a digital compass; a microprocessor, said microprocessor in communication with the positioning detector; a memory storage device in communication with the microprocessor; and a stored program that is readable by the microprocessor, which causes the microprocessor to obtain a post-indication positioning reading from the positioning detector if a primary indication of tampering is detected.

A water supply network is disclosed comprising any of the water meters described above. A general embodiment of the water supply network is provided, in which a reference positioning is known for each of said water meters, and comprising a central control unit programmed to perform the following operations: obtaining a plurality of usage readings from the plurality of water meters; performing a theft analytic algorithm on the plurality of usage readings to determine the likelihood that theft has occurred as a primary indication of tampering; and based on the likelihood that theft has occurred, obtaining a post-indication positioning from each of the water meters and comparing each to its respective reference positioning to determine if a significant change in the positioning of each of the water meters has occurred.

Methods of detecting tampering with a utility meter are disclosed, the utility meter comprising a positioning detector selected from the group consisting of: an accelerometer and a compass.

In a first general embodiment, the method comprises reading the positioning detector in the meter at the time of installation to establish a reference positioning of the meter; receiving a primary indication of tampering; reading the positioning detector to determine a post-indication positioning; and alerting a utility provider if the post-indication positioning substantially deviates from the reference positioning.

A second general embodiment of the method involves a water supply network, said network comprising a plurality of water meters, at least some of which are equipped with positioning detectors comprising a positioning detector selected from the group consisting of: an accelerometer and a digital compass; and for which a reference positioning is known. The second general embodiment of the method comprises: obtaining a plurality of usage readings from the plurality of water meters; computing the water consumed by said plurality of meters over a time period based at least partially on said readings; computing the water supplied to said plurality of meters over said time period; determining a quantity of unaccounted-for water over said time period by computing the difference between an aggregate of water supplied and an aggregate of water consumed over said time period; building a consumed profile of water consumed over said time period; building an unaccounted-for profile of unaccounted for water over said time period; comparing said consumed profile to said profile of unaccounted-for water to determine whether said unaccounted-for water is potentially the result of theft; and if said unaccounted-for water is potentially the result of theft, obtaining measurements of post-indication positioning from each of the positioning detector-equipped water meters and comparing each to its respective reference positioning to determine if a significant change in the positioning of each of the positioning detector-equipped water meters has occurred.

A method of monitoring shipping conditions for a water meter is disclosed, in which the water meter contains a positioning detector, a power source, a memory storage device, and a microprocessor, in which the positioning detector and the memory storage device are in communication with the microprocessor, and in which the positioning detector is one or both of an accelerometer and a digital compass, the method comprising: receiving a first signal from the positioning detector by the processor in response to detection of a first disturbance in the position of the water meter; and recording a first indication of the time of the first disturbance on the memory storage device.

The above presents a simplified summary in order to provide a basic understanding of some aspects of the claimed subject matter. This summary is not an extensive overview. It is not intended to identify key or critical elements or to delineate the scope of the claimed subject matter. Its sole purpose is to present some concepts in a simplified form as a prelude to the more detailed description that is presented later.

### BRIEF DESCRIPTION OF THE DRAWINGS

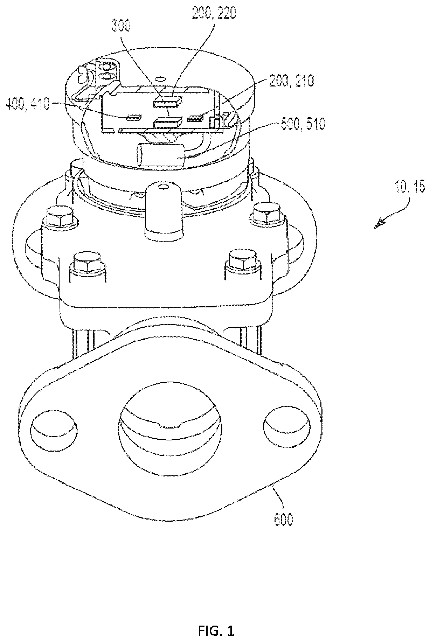

FIG.1: A perspective view of an embodiment of the meter having an external geometry that prevents the water meter from resting on a flat surface in such a way that the water meter is substantially the same positioning as when installed..

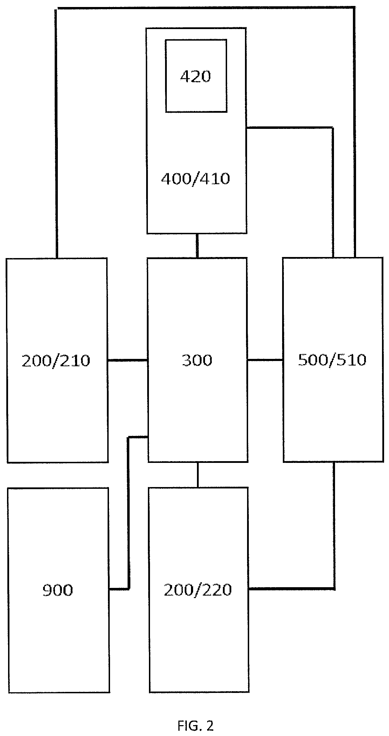

FIG 2: A schematic of the onboard electronics of an embodiment of the meter.

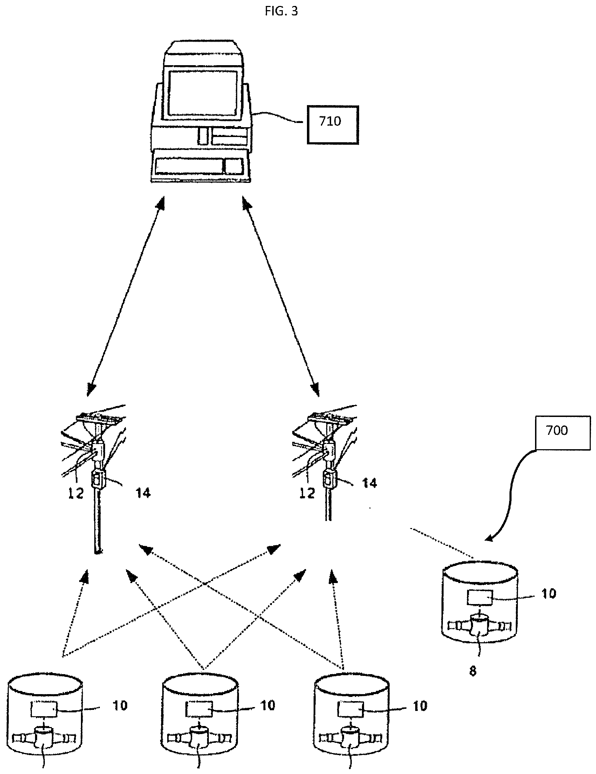

FIG. 3: An embodiment of the water supply network.

### DETAILED DESCRIPTION

### A. DEFINITIONS

Unless otherwise defined, all terms (including technical and scientific terms) used herein have the same meaning as commonly understood by one of ordinary skill in the art of this disclosure. It will be further understood that terms, such as those defined in commonly used dictionaries, should be interpreted as having a meaning that is consistent with their meaning in the context of the specification and should not be interpreted in an idealized or overly formal sense unless expressly so defined herein. Well known functions or constructions may not be described in detail for brevity or clarity.

It will be understood that when a feature or element is referred to as being "on" another feature or element, it can be directly on the other feature or element or intervening features and/or elements may also be present. In contrast, when a feature or element is referred to as being "directly on" another feature or element, there are no intervening features or elements present. It will also be understood that, when a feature or element is referred to as being "connected", "attached" or "coupled" to another feature or element, it can be directly connected, attached or coupled to the other feature or element; or intervening features or elements may be present. In contrast, when a feature or element is referred to as being "directly connected", "directly attached" or "directly coupled" to another feature or element, there are no intervening features or elements present. Although described or shown with respect to one embodiment, the features and elements so described or shown can apply to other embodiments.

The terminology used herein is for the purpose of describing particular embodiments only and is not intended to be limiting. As used herein, the singular forms "a", "an" and "the" are intended to include the plural forms as well, unless the context clearly indicates otherwise.

With reference to the use herein of the word(s) "comprise" or "comprises" or "comprising", unless the context requires otherwise, those words are used on the basis and clear understanding that they are to be interpreted inclusively, rather than exclusively, and that each of those words is to be so interpreted in construing the description and/or the following claims. Wherever an embodiment is described as "comprising" one or more elements, it indicates that embodiments are also contemplated that "consist of" or "consist essentially of' the same elements.

The term "consisting essentially of" means that, in addition to the recited elements, what is described or claimed may also contain other elements (steps, structures, ingredients, components, etc.) that do not adversely affect the operability of what is described or claimed for its intended purpose stated in this disclosure. Any additional element that would adversely affect operability for the intended purpose stated in this disclosure is excluded, regardless of whether such additional element would be desirable for some other purpose.

The terms "about" or "approximately" mean within a range of reasonable error around a central value. Such reasonable error may for example stem from the precision of an instrument or method used to measure the value. The error could also stem from the precision of a method of making a component of a device. Specific examples of such limits of reasonable error are 20%, 10%, 5%, 2.5%, and 1%. Unless specified otherwise, all numerical values may be approximate.

The terms "first", "second", and the like are used herein to describe various features or elements, but these features or elements should not be limited by these terms. These terms are only used to distinguish one feature or element from another feature or element. Thus, a first feature or element discussed below could be termed a second feature or element, and similarly, a second feature or element discussed below could be termed a first feature or element without departing from the teachings of the present disclosure.

The term "processor" or "central processing unit" (CPU) as used herein, refers to a software execution device capable of executing a sequence of instructions ("program"). The CPU comprises an arithmetic logic unit, and may further comprise one or both of a register and cache memory.

The term "storage device" as used herein refers to a machine-readable data storage device that retains data that can be read by mechanical, optical, or electronic means, for example by a processor. Such devices are sometimes referred to as "memory," although as used herein a machine-readable data storage device cannot comprise a human mind in whole or in part, including human memory. A storage device may be classified as primary, secondary, tertiary, or off-line storage. A storage device cannot be construed to be a mere signal, although information may be communicated to and from a storage device via a signal.

The term "microprocessor" refers to a CPU on at least one integrated circuit. Modern microprocessors often comprise one integrated circuit.

The term "computing device" refers to a CPU, a memory storage device, and a bus connected to exchange information between the CPU and the memory storage device. The CPU may comprise one or both of a register and a cache. Additional peripherals may be present.

### B. TAMPER-DETECTING UTILITY METER

A tamper-detecting utility meter **10** is disclosed, comprising a positioning detector **200** selected from the group consisting of: an accelerometer **220** and a digital compass **210**; a microprocessor **300**; a memory storage device **400**; and at least one power source **500**. Two general embodiments are disclosed. The utility meter may be of any type, but is advantageously a meter for measuring the usage of a fluid resource, such as water, natural gas, oil, steam, and the like. Fluid utility meters are often located in places where they have no ready access to centralized electrical power. The utility meters of this disclosure are configured to detect tampering while requiring only infrequent readings of the positioning detector **200**, which conserves power. In contrast, electricity meters have ready constant access to centralized electrical power.

The tamper-detecting meter **10** allows the identification of possible tampering events by detecting a change in positioning of the meter **10**. Devices that allow the detection of a change in positioning include accelerometers **220** and digital compasses **210**, which are increasingly utilized in consumer electronics.

The positioning detector **200** may be an accelerometer **220**, a digital compass **210**, or both. An accelerometer **220** detects acceleration in from one to three dimensions. An accelerometer **220** also measures force due to gravity as acceleration. Because a change in the orientation of the accelerometer **220** can result in a change in the relative vector of acceleration **220** due to gravity (g), the accelerometer **220** can be used to determine the orientation of the meter **10** at times points when the apparent velocity of the meter **10** is not changing. This is because any rotation around a horizontal axis (i.e., axis that is perpendicular to a plum time) that deviates from 360° will result in a change in the vector of gravity relative to the accelerometer **220**; such rotation is referred to in the aerospace context as "roll" or "pitch." In this disclosure, the relative positioning of the meter **10** around an axis perpendicular to a plum line is referred to as "orientation." The accelerometer **220** cannot detect a change in positioning that is due to rotation around the axis of a plum line based only on the change in the vector of g, because in that case the vector of g does not change, unless rotation has also occurred in at least one of the other two dimensions. Of course, the accelerometer **220** can detect the acceleration that occurs when rotation is initiated or halted. The relative positioning of the meter **10** due to rotation around the axis of a plum line is referred to in this disclosure as "heading."

When a meter **10** is moved in any manner, the device is necessarily subject to acceleration. The accelerometer **220** can detect such acceleration. A lower acceleration might indicate a controlled movement of the meter **10**, while a higher acceleration may indicate a free-fall event (in fact this would be detected as a reduction in acceleration due to gravity). Accelerometers **220** include those which employ capacitive, piezoelectric, piezoresistive, Hall Effect, magnetoresistive, and heat transfer technologies to detect acceleration. Depending upon the technological application, commonly used accelerometers **220** may have analog or digital output, and may detect motion in one-axis, two-axes, or three-axes. A three-axis digital accelerometer **220** can detect acceleration along any of the axes and is commonly employed in smartphone technology.

In contrast to the accelerometer **220**, the digital compass **210** is capable of measuring the heading of the meter **10**. The digital compass **210** may be a compass which detects heading according to the Earth's magnetic field (magnetometers) or may be a compass which employs global positioning satellite (GPS) antennas to detect motion and heading. When the meter **10** is removed or inverted, it may result in a net change in the heading of the meter **10**, which is detectable by the digital compass **210** employing a magnetometer. Alternatively, if the digital compass **210** employs GPS technology, a change in heading or translocation of the meter may be detected by a change in the signals received by the GPS antennas. Microelectromechanical system positioning detectors (MEMS) are nano-scale components which may be arrayed as chips on a microprocessor **300**. MEMS-based accelerometers **220** can be found in consumer electronics such as smartphones, tablets, computer gaming controls, and many other devices in common use. MEMS-based magnetometers also can be found in consumer electronics including cellular phones and wearable tracking devices, among many others. In some instances, the MEMS component may include both an accelerometer **220** and magnetometer on a single chip. In some embodiments, the positioning detector **200** may be an accelerometer **220**. In other embodiments, the positioning detector **200** may be a digital compass **210**. In still further embodiments, the meter may comprise both an accelerometer **220** and a digital compass **210** to detect changes in positioning.

Thus, a change in positioning can refer to a change in orientation, a change in heading, a change in location, or any combination of the foregoing. A change in location alone will only be detected by the accelerometer **220** if a reading is taken during an acceleration event while the meter **10** is moving from one location to another.

In some embodiments, the events detected by the positioning detector **200** are transmitted to a connected microprocessor **300** and stored in a memory storage device **400**. The memory storage device **400** may be any suitable device as known in the art. Examples of suitable memory storage devices **400** include read-only memory (ROM), flash memory **410**, ferroelectric RAM (F-RAM), optical discs and magnetic computer storage devices such as hard disks, floppy disks, or magnetic tape. In some embodiments, the memory storage device **400** comprises flash memory **410**. In some embodiments, all changes in positioning are recorded in the memory storage. Accelerometers **220** may be extremely sensitive and able to detect even small variations in positioning, or able to detect vibrational movements. Some movements detectable by the accelerometer **220** may be non-theft related events such as an earthquake, or vibration due to placement in a region near a major highway, train track, or where the meter is in close proximity to the operation of heavy equipment. Therefore, in further embodiments, only accelerations exceeding a threshold value are recorded. In specific embodiments, the threshold value is 0.1 x g, 0.5 x g, 2 x g, 5 x g, 10 x g, up to any of the foregoing values, and any range between any two of the foregoing values.

The microprocessor **300** and memory storage device **400** require at least one source of power. For electrical meters, this source of power may be the central electrical utility to which the meter is connected. Fluid utility meters are often located in places where they have no ready access to centralized electrical power. Even in locations or uses where centralized electrical power is available to the meter, it may be desirable to have a secondary source of power in case of power failure. Alternatively, it may be desirable to have a power source **500** independent of the centralized electrical power so that if the tampering event involves disconnecting the meter from the centralized electrical power, the secondary power source **500** may still function to power the microprocessor **300** and memory storage unit for recording of data from the positioning detector **200**. Therefore, in some embodiments, the source of power comprises a local power source **510**. The local power source **510** may be any known in the art, including a battery.

### 1. External Geometry

In a first general embodiment, the meter comprises a positioning detector **200**; a microprocessor **300** connected to receive readings from the positioning detector **200**; a memory storage device **400** in communication with the microprocessor **300**; at least one power source **500** to provide power to the microprocessor **300** and the memory storage device **400**; and a housing **600** having an external geometry that prevents the water meter **10** from resting on a flat surface in such a way that the water meter **10** has substantially the same positioning as when installed.

In some embodiments, the external geometry of the housing **600** may be generally spherical or ellipsoidal, wherein the curvature of the base of the housing **600** prevents the meter from resting in a stable positioning either vertically or horizontally when placed upon a flat surface. Such a geometry will ensure that when removed from installation, the meter will no longer be in substantially the same position as when it was installed. It will be appreciated that other shapes of external geometry may be employed, so long as the overall shape renders the meter unstable vertically and horizontally when placed upon a flat surface. Shapes which provide a single contact point on a curved surface are inherently unstable and will satisfy this need. Some embodiments of the external geometry provide the curved surface on the face of the meter which is normally the bottom surface when the meter is installed. In such embodiments the meter cannot be stably positioned in its installation positioning on a flat supporting surface. Examples of such geometry include a spherical dome and an ellipsoidal dome.

### 2. Programmed Utility Meter

In a second general embodiment, the meter comprises a positioning detector **200**; a microprocessor **300** in communication with the positioning detector **200**; a memory storage device **400** in communication with the microprocessor **300**; and a stored program **420** that is readable by the microprocessor **300**, which causes the microprocessor **300** to obtain a post-indication positioning reading from the positioning detector **200** if a primary indication of tampering is detected.

In some embodiments, the positioning detector **200** may be an accelerometer **220**. In other embodiments, the positioning detector **200** may be a digital compass **210**. In still further embodiments, the meter may comprise both an accelerometer **220** and a digital compass **210** to detect changes in positioning. The digital compass **210** and accelerometer **220** may be any that are described as suitable above.

A "primary indication of tampering" is an event which is sufficiently anomalous that, when detected, it would indicate that an investigation may be warranted in order to determine if a theft event has occurred by removal or inversion of the meter. A primary indication of tampering may be receipt of an interrupt signal from the positioning detector **200**, detection of air in the meter, detection of reverse flow, or anomalously low usage. The primary indication of tampering serves as an indication that a theft event may have occurred, warranting reading the positioning detector **200** to identify any changes in positioning. By requiring a primary indication of tampering before the microprocessor **300** queries the positioning detector **200**, power can be saved until such time as it is needed, reducing overall power consumption. In some embodiments, where the meter measures fluids such as water, natural gas, oil, steam, and the like, the meter may be connected to a conduit **800** through which the fluid normally flows and where the meter is operable to make measurements of flow and detect the absence of the fluid in the conduit **800**. In such embodiments, detection of absence of the fluid in the conduit **800** is a primary indication of tampering. In some embodiments, the meter may be an ultrasonic meter **15** which uses ultrasound to measure the velocity of fluid flow and can, therefore, detect an absence of fluid in the meter.

A program readable by the microprocessor **300** causes the microprocessor **300** to obtain a post-indication positioning reading from the positioning detector **200** if a primary indication of tampering is detected. The post-indication positioning reading may be recorded in the memory storage device **400**. This information may allow the utility to distinguish tampering events from minor positioning changes due to legitimate causes. In some embodiments of the programmed utility meter, during normal operation (as opposed to during installation) the positioning detector **200** is only read by the processor when triggered by a primary indication of tampering.

In embodiments where both an accelerometer **220** and a digital compass **210** are present, when a primary indication of tampering is detected, the stored program **420** may cause the microprocessor **300** to obtain a post-indication accelerometer reading from the accelerometer **220** and a post-indication compass reading from the digital compass **210**. In other embodiments, the stored memory program may cause the microprocessor **300** to obtain a post-indication reading from one of the accelerometer **220** and the digital compass **210**.

In some embodiments, the accelerometer **220**, digital compass **210**, or both if present, may take readings at predetermined periodic intervals. In other embodiments, measurement of positioning by the detectors occurs only if there has been a primary indicator of tampering.

In particular embodiments, the memory storage device **400** contains a reference positioning value **430** which corresponds to the positioning of the meter recorded at the time of installation. The reference positioning value indicates one or both of the orientation and heading of the meter **10** at the time of installation. By comparing the value of the reference positioning to the value measured after a primary indicator of tampering, the utility may determine the degree of rotation that has occurred. This information can be used to more accurately identify tampering events.

In some embodiments, the meter is connected to a centralized power supply. However, this may not be possible for some fluid meters without ready access to such an external source of power, and some embodiments of the meter are not connected to an external power supply. Therefore, in other embodiments, the source of power for the microprocessor **300**, memory storage device **400**, and positioning detector **200** may comprise a local power source **510**. The local power source **510** may be any known in the art, including, for example, a battery.

### C. A NETWORK OF TAMPER-DETECTING WATER METERS

A plurality of tamper-detecting water meters **10**, each with a known reference positioning, may be arranged in a water supply network **700**. The plurality of water meters **10** may be any of the tamper-detecting meters disclosed above. The water supply network **700** comprises a central control unit **710** programmed to obtain usage readings from each of water meters **10**; perform a theft analytic algorithm on the usage readings to determine the likelihood that theft has occurred as a primary indication of tampering; and based on the likelihood that theft has occurred, obtain a post-indication positioning from each of the water meters **10** and compare each to its respective reference positioning. This comparison may be used to determine if a significant change in the positioning of any of the water meters **10** has occurred. According to specific embodiments, the water meters **10** in the supply network may comprise an accelerometer **220**, a digital compass **210**, or both an accelerometer **220** and digital compass **210** to detect the post-indication positioning.

### D. METHODS OF DETECTING TAMPERING WITH A WATER METER

A method of detecting tampering with a water meter **10** is provided, the meter comprising a positioning detector **200**; and the method comprising: reading the positioning detector **200** in the meter at the time of installation to establish a reference positioning of the meter; receiving a primary indication of tampering; reading the positioning detector **200** to determine a post-indication positioning; and alerting a water provider if the post-indication positioning substantially deviates from the reference positioning. In embodiments of this method where the positioning detector **200** comprises both an accelerometer **220** and a digital compass **210**, both the digital compass **210** and the accelerometer **220** readings are recorded at the time of installation to establish the reference positioning of the meter and both the accelerometer **220** and the digital compass **210** are read to determine the post-indication positioning.

In some embodiments of the method for detecting tampering, the alerting step comprises alerting the water provider if the post-indication positioning substantially deviates from the reference positioning. Examples of ways in which the alerting step may be performed include transmission of a signal from the meter to the utility by means of a wireless device, radio transmitter, or other electronic means connected to the meter.

Anomalously low usage may be calculated by comparison of the data to data collected over a plurality of past usage periods. Zero usage days may be due to removal of the meter from the line, or may be due to some legitimate cause such as the consumer being away. If the meter is connected to a business establishment, zero usage days may be due to the business being closed on certain days. Thus, not all zero usage days are indicative of a tampering event. Therefore, in some embodiments, the method for detecting anomalously low usage comprises calculating the ratio of the number of the past usage periods in which zero usage occurred for at least a threshold number of days to the total number of the past usage periods analyzed. In one embodiment, the total number of past usage periods used in calculating the ratio is at least three.

In other embodiments, a theft detection score may be calculated based upon the detection of primary indications of tampering. It will be appreciated that there are many ways to calculate a theft detection score. However, it is contemplated that some embodiments of the score reflect the individual factors which contribute to the indications that theft is occurring. Therefore, in some embodiments, the theft detection score may serve as a unique code which allows the utility to readily identify the indicators which contributed to the score. In order to produce a unique theft detection score, the score may be calculated by selecting a base score from a matrix of base scores that corresponds to one of either (1) the greatest sub-periodic value of the ratio of [a volume of reverse flow] to [a gross volume of water consumption] during a given analysis period; or (2) the longest single period of zero usage during a given sub-period during the analysis period. A plurality of adders based on the presence or absence of additional indicia of tampering may be added to the base score. If a unique score is desired, none of the plurality of adders is the sum of two or more of any of the other plurality of adders, and none of the base scores is the sum of two or more of any of the plurality of adders. In this way a unique score may be generated with the contributing theft conditions may be readily identifiable because a score of a given value can only be produced by a single combination of a base score and adders.

In a second embodiment of a method for calculating a theft detection score, the score is calculated by selecting a base score that corresponds to one of (1) the greatest sub-periodic value of the ratio of [a volume of reverse flow] to [a gross volume of water consumption] during a given analysis period; or (2) the longest single period of zero usage during a given sub-period during the analysis period. To this base score the following may be added: a first adder if declining usage is detected over the analysis period; a second adder if static usage is detected over the analysis period; a third adder if the meter contains a digital meter interface unit; and a fourth adder if the average ratio of [volume of reverse flow] to [gross volume of water consumption] over the analysis period is above a predetermined threshold level. A unique theft detection score may be calculated where none of the plurality of adders is the sum of two or more of any of the other of the plurality of adders, and none of the base scores is the sum of two or more of any of the plurality of adders.

As noted previously, in some cases there may be a legitimate cause for abnormally low usage, or the sensitivity of an accelerometer **220** may result in a signal being generated in response to a non-theft event. Therefore, in some embodiments of these methods for detecting tampering with a water meter **10**, the calculated theft detection score must exceed a threshold value and/or confidence value in order to serve as a primary indication of tampering. The confidence value is established by the amount of history considered in the score. The amount of history may be calculated, for example, as a function of a period of time, measure cycle, or billing cycle. For example, the amount of history could be determined based on the number of months of data available. In a specific example, where there are 0-3 months of history, the confidence value would be zero, and no analysis would be performed to determine if a theft event has occurred. As the length of history considered increases, the confidence value increases. In an exemplary embodiment, 3-6 months results in a 25% confidence value; 6-12 months result in a 40% confidence value; 12-18 months results in a 65% confidence value; 18-24 months results in a 75% confidence value; and 24 months or longer results in a 90% confidence value.

### E. METHOD FOR MONITORING SHIPPING CONDITIONS

In addition to detecting tampering and theft events, any of the tamper-detecting meters in this disclosure may allow the utility to monitor shipping conditions to identify any events during transit or installation which may have caused damage to the meter. An accelerometer **220** may be used to detect a free-fall event, such as the meter being dropped during shipping or installation. In addition to detecting the occurrence of a free-fall event, the accelerometer **220** can detect the length of time of free-fall. This information can be used to calculate the approximate distance of the fall, and approximate the impact when the meter struck the ground.

The method comprises the processor receiving a first signal from the positioning detector **200** in response to detection of a first disturbance in the position of the water meter **10**, and recording a first indication of the time of the first disturbance on the memory storage device **400**.

In some embodiments of the method, the water meter **10** comprises both an accelerometer **220** and a digital compass **210**. In these embodiments the first signal is from the accelerometer **220**, and the method comprises receiving a second signal from the digital compass **210** in response to detection of the first disturbance in the position of the water meter **10**. During transit, some amount of movement and change in position is likely to occur. Therefore, it is contemplated that some embodiments of the method set a threshold limit for the magnitude of the disturbance to distinguish routine shipping conditions from those which are unusual and which may have resulted in damage to the meter. In some such embodiments, an indicator is recorded only when the disturbance exceeds a threshold level. In a further embodiment, the disturbance in the position of the water meter **10** is an acceleration event above a threshold acceleration value. The threshold acceleration value may be for example 0.1 x g, 0.5 x g, 1 x g, 5 x g, 10 x g, at least any of the foregoing accelerations, or a range between any of the foregoing accelerations. In another embodiment, the disturbance in the position of the water meter **10** is a repositioning event (i.e., a change in heading, orientation, or both) above a threshold angle value. The threshold angle may be for example 0°, 25°, 35°, 45°, 55°, 65°, 70°, 80°, 90°, at least any of the foregoing, and a range between any two of the foregoing angles.

In some embodiments, the method comprises receiving a second signal from the positioning detector **200** by the processor in response to detection of a second disturbance in the position of the water meter **10**, and recording an indication of the time of the second disturbance on the memory storage device **400** over the first indication of the time of the first disturbance.

Some embodiments of the tamper-detecting meter may further comprise a radio communications device **900** in communication with the microprocessor **300**. When a radio communications device **900** is present, the method for monitoring shipping conditions may further comprise the meter performing the steps of receiving an incoming radio signal requesting disturbance data, and responding by transmitting an outgoing radio signal containing the time and indication of any disturbances recorded on the memory storage device **400**.

In some embodiments, the radio communications device **900** may further be employed to identify disturbances occurring after installation of the meter. In this case, the meter receives an incoming radio signal indicating an installation event has occurred. Thereafter, when a post-installation disturbance comprising an acceleration event above a threshold acceleration value, or a repositioning event above a threshold angle occurs, a post-installation signal will be received by the processor from the positioning detector **200**.

### F. METHOD OF DETECTING TAMPERING IN A WATER SUPPLY NETWORK

Any of the tamper-detecting water meters **10** disclosed herein may be utilized in a method for detecting tampering with a water meter **10** in a water supply network **700** where the network comprises a plurality of water meters **10**, where at least some of the water meters **10** in the network are positioning detector-equipped meters, and the reference positioning for the positioning-equipped meters is known.

A utility or other entity operating a distribution system for water, gas, or electricity typically measures the amount of the resource that it is supplying to the distribution system, either through supply meters or other similar means. Each consuming entity has at least one meter measuring the amount of the resource that it is removing from the distribution system. The total amount of the resource supplied should equal the amount consumed. However, utilities sometimes encounter discrepancies between the amount supplied and the amount consumed in their distribution systems. These discrepancies may be attributable to one or more of the following factors: inaccuracies in metering devices, leaks, line breakages, known singular events (such as a fire crew accessing water from a hydrant to put out a fire), and theft. The difference between the measured quantity of resource supplied and the measured quantity of resource consumed is simply referred to as "unaccounted for."

Any of the tamper-detecting meters described in this disclosure can be utilized in the method to identify theft events contributing to unaccounted-for-water. A general embodiment of this method comprises obtaining a usage reading from each of the water meters 10 in the system. The readings are aggregated to compute the total water consumed over a time period. The utility then computes the aggregate of water supplied to system during the same time period. The amount of unaccounted-for water during the time period is calculated by computing the difference between the aggregate of water supplied and the aggregate of water consumed during the time period. The calculated data is used to build profile of consumed water and a profile of unaccounted for water over the time period. Next the two profiles are compared to determine whether the unaccounted-for water over the time period is potentially the result of theft. If there is a spike or surge of unaccounted for water over a limited time period, then external, known causes of water loss should be investigated. These include breakages of water lines, flushing of the system, and use by a fire department putting out fires. However, if there is no known external cause that corresponds in time to the surge of unaccounted for water, then such loss is likely due to theft.

A method is provided for quantifying, monitoring, and analyzing over time unaccounted for resources in a metered distribution network, in which meter readings are missing, by utilizing estimates of the missing readings so that a value for the unaccounted for resource may always be calculated. This portion of this disclosure will use, by way of example, water and water distribution systems operated by a utility, but it should be understood that the principles and inventions disclosed are equally applicable to any distribution system and metered resource, including water, natural gas, electricity, oil, or chemicals, whether operated by a utility or other entity.

In an exemplary embodiment, a utility supplies water to a multiplicity of consumption points, which may include individual residences in a housing subdivision, industrial customers such as factory or office building, or any combination thereof, as well as apartments, condominiums, businesses, restaurants, and any other consumer of water. A consumption meter is typically placed at each consumption point, with a plurality of meters measuring consumption at each residence, factory, or office building. A utility may subdivide a large system with a large number of consumers into one or more segments or subsystems, each with a subset of the consumers, in which the utility measures both the amount of the resource entering and exiting each subsystem. In the exemplary embodiment, source meters measure the amount of water entering and leaving, respectively, the residential subdivision represented by houses. Source meters measure the amount of water entering and leaving the segment of the system supplying end users.

By taking readings of each meter, the utility can measure the consumption of each consumer in the distribution network and can track the quantity of water entering and leaving each segment of the system. It should be noted that the term "reading" is used here in its broadest sense and includes both the value of an incremental counter on a meter and a measurement of consumption. Meters typically increment a counter that is representative of water flow through the meter, and this counter is read and reported as a "reading." In order to determine consumption, an earlier reading is subtracted from a later reading to provide the amount of water that flowed through the meter between the two readings. Other meters may internally compute or report consumption values over predefined time intervals. The term "reading" should be understood to include information reported or derived from reading a meter from which consumption may be directly or indirectly determined.

By subtracting the amount of water supplied to a segment of the water system, such as the segment between two source meters M_{A} and M_{B} (herein after segment AB), from the water consumed by consumption meters M₁ to Mₙ, over a given period of time, the amount of unaccounted for water should be able to be determined. Meter readings should be made within a defined time period to properly determine the unaccounted for water. In a typical distribution system, a utility may serve tens of thousands of consumers and have tens of thousands of meters in a portion of its system. To obtain readings of these many meters close enough in time to one another to accurately determine the quantity of unaccounted for water, it is preferable for the meters to be read electronically and the readings reported to a central data center, through one of the many network communications systems known in the art. To accomplish this, "read" or similar commands are issued electronically to the meters of interest over a defined time period in order to gather data about consumption. In response, the communications modules on the meters should take a reading from the meter and report back the actual meter reading. Alternatively, the meters may make readings on defined intervals (fixed, variable, or pseudorandom) on a continual basis, such as every one, five, or fifteen minutes, and regularly report those readings on the same or some other interval. This type system is referred to as a "bubble up" system. In some embodiments of a bubble up system, the difference between the time at which the reading was made and the time that the reading was reported could be significant and must be addressed, as is understood by those of ordinary skill in the art.

However, several things can go wrong that prevent meter readings from being reported to a central data center for analysis. The communications module on a meter may not receive a command to read the meter, or its reading may be lost or corrupted in transmission. The battery may die in the communications module, or the module may otherwise be inoperative to read the meter or transmit the reading. In a system with 30,000 meters, even a 99% success rate means 1% or 300 of the meters fail to report their readings. These nonresponsive meters may be connected to consumers of any size. Without accounting for these missing readings, the amount of unaccounted for water cannot be calculated.

In addition, the calculation of a quantity of unaccounted for water is usually performed over a defined time period, such as 24 hours, 7 days, or 30 days. Because the internal clocks in meters that govern the time at which readings are made are not necessarily synchronized to actual time, such that the intervals occur randomly with respect to defined periods on an actual clock (such as hourly), and also because the clocks can drift over time, the reported readings will not necessarily correspond to the beginning and ending points of the defined time period. For example, if a meter is programmed to make reading every 15 minutes, its reading for midnight may be before or after midnight by as much as 7.5 minutes. When such variation is considered across a system comprising thousands of meters, relatively few of the meters will report a reading at exactly midnight and most readings will not be synchronized with another. Therefore, readings at the beginning and ending points of the defined time period are effectively missing. As used herein, the term missing readings shall include readings that are lost in transmission, corrupted, or result from an inoperable, defective, or nonresponsive meter, as well as readings desired for a specific point in time that are not received because a meter's reading interval does not coincide with that point in time (i.e., is not synchronized with a specific actual time).

In one embodiment of the present system, the missing meter readings are estimated in order to be able to consistently quantify the volume of unaccounted for water in the system. Systems known in the art use various methodologies, network topologies, and protocols to receive readings from consumption meters. These include polling systems, in which the host communicates commands to the communications modules at the meter and receive the responsive reading back from the meter, and bubble-up systems, in which the meters regularly report readings made on a fixed time interval. Any such system could be utilized in connection with the present invention. In a polling system, the host system may issue "read" commands to a group of consumption meters for which it is desired to determine the amount of unaccounted for water loss. In some cases, the quantity of water supplied will be known by direct measurement at the utility's source. More often, however, the utility will need to read source meters that measure the amount of water that enter and leave a particular portion of a distribution system. If that is the case, the system also issues read commands to the source meters at the same time. In a bubble-up system, the host regularly receives readings from consumption and source meters in the distribution network. Regardless of the system used, if a sufficient number of consumption meters are being polled, or even if a relatively small number of consumption meters is being polled repeatedly over an extended time period, or in a bubble-up system a sufficiently large number of meters are reporting their data, the host system will not receive readings from all meters for every desired time interval, or a reading for a specified point in time (e.g., midnight), for the reasons stated above.

Upon gathering the actual readings from the meters, the data is analyzed to identify missing readings. An estimated reading is determined for each missing reading. The estimated reading may be made in several ways. Readings, including historical readings, are typically stored in a database for review and analysis. Therefore, a prior actual reading for the meter at issue, which corresponds to the missing reading, may be located. The prior actual reading may be a reading at the same time on the same day of the week from the previous week, for example. If in a particular study of unaccounted for water, the consumption period was for an entire day and a day's reading was missing, then the consumption for the same day of the week the previous week, or the previous month, could be used. Alternatively, and especially where the missing reading is one resulting from lack of synchronization between a meter's reading interval and a desired specific point in time or from lack of synchronization among meters, missing readings may be estimated by using straight-line estimation if actual readings are available before and after the missing reading. The actual reading the closest in time before, and the actual reading closest in time after, the missing reading are identified. The difference between these two actual readings is computed. The difference is multiplied by the fraction of time the missing reading is between the two known readings. To determine this fraction, the time difference between the time of the missing reading and the time of the earlier reading is the numerator; the time difference between the time of the later reading and the time of the missing reading is the denominator. Other methods of estimating readings could also be used. For example, the average or median consumption may be used to estimate the reading for the same time of day (whether that is a particular hour, or set of hours), or the same time of day for the same day a week earlier, or the average consumption for the same time over the previous week, month, or year. In a system in which source meters are read, readings may be estimated for any missing reading from the source meters using the above methodology.

After the estimated readings are determined, the total amount of water supplied and total amount of water consumed are calculated. For example, the total amount may be calculated as the sum of the estimated readings and the actual meter readings. The difference between these two figures is the unaccounted for water, over the defined time period. While the quantity of unaccounted for water itself is a valuable piece of information, additional information can be provided from the data collected. As a measure of reliability, the quantity of water consumption from estimated readings versus actual readings can be supplied. This ratio provides guidance as to the reliability of the unaccounted for water figure. The measure of reliability may be in some embodiments a function of the ratio of the quantity of water consumption determined from actual meter readings to the quantity of water consumption determined from estimated readings. For example, if less than 1% of the readings were estimated, the unaccounted for water figure would be quite reliable. However, if 30% of the readings were estimated, then the unaccounted for water figure is not particularly reliable.

In other embodiments, the profiles of water supplied, water consumed, and unaccounted for water over the defined time period can be constructed. The values for each of water supplied or consumed, and unaccounted for water are plotted versus time. The profiles are then be analyzed to determine the source of unaccounted for water. If there is a spike or surge of unaccounted for water over a limited time period, then external, known causes of water loss should be investigated. These include breakages of water lines, flushing of the system, and use by a fire department putting out fires. However, if there is no known external cause that corresponds in time to the surge of unaccounted for water, then such loss is likely due to theft. In one embodiment, profiles of consumption at individual meters may be constructed and analyzed. If consumption at a meter goes from a reasonable value to zero at the same time as the surge in unaccounted for water, and then returns to a reasonable value after the surge is over, then that pattern indicates that the meter may have been disconnected while the consumer used a large quantity of water for a one-time purpose, such as filling up a swimming pool.

Where there are no obvious spikes or surges in unaccounted for water, the profile of unaccounted for water as compared to the profile of water consumed may still reveal the cause of the unaccounted for water. If the amount of unaccounted for water varies directly with the amount of consumption, then the cause of that unaccounted for water is predominantly inaccurate meters. That is, if the quantity of unaccounted for water approaches zero when water consumption approaches zero, then increases steadily generally in proportion to an increase in consumption, this usually indicates the meters are not accurate. Such a pattern is to be contrasted with that caused by leaks.

Leaks in the distribution system tend to vary inversely with consumption. That is, when consumption is very low, the pressure in the system will be higher and relatively more water will be lost to leaks. When consumption is high, the pressure in the system will be less and relatively less water will be lost to leaks. Therefore, if the profile of unaccounted for water over the time period remains relatively constant at periods of zero or very low consumption, and remains the same or decreases as consumption increases, then the predominant cause of the unaccounted for water is likely leaks. Depending on the availability and number of source meters to measure the quantity of water flowing into and out of segments of a distribution system, the data can be broken down by segment, and leaks, inaccurate meters, or sources of theft can be isolated by analyzing profiles of supply, consumption, and unaccounted for water.

If the utility determines that the unaccounted-for water is potentially the result of theft, the utility may then obtain measurements of positioning from each of the positioning detector-equipped water meters **10** and compare each to its respective reference positioning. This comparison is used to determine if a significant change in the positioning of any of the positioning detector-equipped water meters **10** in the system has occurred. Any significant change in positioning is indicative of a theft event, and would identify meters that merit further investigation.

### G. CONCLUSIONS

It is to be understood that any given elements of the disclosed embodiments of the invention may be embodied in a single structure, a single step, a single substance, or the like. Similarly, a given element of the disclosed embodiment may be embodied in multiple structures, steps, substances, or the like.

The foregoing description illustrates and describes the processes, machines, manufactures, compositions of matter, and other teachings of the present disclosure. Additionally, the disclosure shows and describes only certain embodiments of the processes, machines, manufactures, compositions of matter, and other teachings disclosed, but, as mentioned above, it is to be understood that the teachings of the present disclosure are capable of use in various other combinations, modifications, and environments and is capable of changes or modifications within the scope of the teachings as expressed herein, commensurate with the skill and/or knowledge of a person having ordinary skill in the relevant art. The embodiments described hereinabove are further intended to explain certain best modes known of practicing the processes, machines, manufactures, compositions of matter, and other teachings of the present disclosure and to enable others skilled in the art to utilize the teachings of the present disclosure in such, or other, embodiments and with the various modifications required by the particular applications or uses. Accordingly, the processes, machines, manufactures, compositions of matter, and other teachings of the present disclosure are not intended to limit the exact embodiments and examples disclosed herein. Any section headings herein are provided only for consistency with the suggestions of 37 C.F.R. § 1.77 or otherwise to provide organizational queues. These headings shall not limit or characterize the invention(s) set forth herein.

## Claims

1. A tamper-detecting water meter comprising:
(a) an orientation detector selected from the group consisting of: an accelerometer and a digital compass;
(b) a microprocessor connected to receive readings from the orientation detector;
(c) a memory storage device in communication with the microprocessor;
(d) at least one power source to provide power to the microprocessor and the memory storage device;
(e) a housing having an external geometry that prevents the water meter from resting on a flat surface in such a way that the water meter is substantially the same orientation as when installed.

2. The water meter of claim 1, in which the memory storage device comprises flash memory.

3. The water meter of claim 1, in which the power source is a local power source.

4. The water meter of claim 1, in which the external geometry comprises a surface that is curved in at least one dimension, wherein said surface is directly below the meter's center of gravity when installed.

5. The water meter of claim 1, comprising a digital compass connected to the processor to allow the processor to receive readings from the compass; and an accelerometer connected to the processor to allow the processor to receive readings from the accelerometer.

6. A tamper-detecting utility meter comprising:
(a) an orientation detector selected from the group consisting of: an accelerometer and a digital compass;
(b) a microprocessor, said microprocessor in communication with the orientation detector;
(c) a memory storage device in communication with the microprocessor; and
(d) a stored program that is readable by the microprocessor, which causes the microprocessor to obtain a post-indication orientation reading from the orientation detector if a primary indication of tampering is detected.

7. The meter of claim 6, in which the memory storage device contains a reference orientation value.

8. The meter of claim 6, in which the stored program only causes the microprocessor to obtain a reading from the orientation detector if a primary indication of tampering is detected.

9. The meter of claim 6, in which the orientation detector is not connected to an external power supply.

10. The meter of claim 6, wherein said meter is connected to a conduit through which a fluid normally flows, said meter operable to make measurements of flow and detect the absence of the fluid in said conduit, and in which detection of absence of the fluid in the conduit is a primary indication of tampering.

11. The meter of claim 10, in which the fluid is a liquid.

12. The meter of claim 10, wherein said meter is an ultrasonic meter.

13. The meter of claim 6, comprising both an accelerometer and a digital compass.

14. The meter of claim 13, in which the stored program causes the microprocessor to obtain a post-indication accelerometer reading from the accelerometer; and in which the stored program causes the microprocessor to obtain a post-indication compass reading from the digital compass if a primary indication of tampering is detected.

15. A water supply network comprising a plurality of tamper-detecting water meters as in claim 6, in which a reference orientation is known for each of said water meters, and comprising a central control unit programmed to perform the following operations:
(a) obtaining a plurality of usage readings from the plurality of water meters;
(b) performing a theft analytic algorithm on the plurality of usage readings to determine the likelihood that theft has occurred as a primary indication of tampering; and
(c) based on the likelihood that theft has occurred, obtaining a post-indication orientation from each of the water meters and comparing each to its respective reference orientation to determine if a significant change in the orientation of each of the accelerometer-equipped water meters has occurred.

16. The network of claim 15, in which the plurality of water meters each comprise a digital compass and an accelerometer; and in which the central control unit is programmed to obtain a post-indication accelerometer orientation and a post-indication compass orientation.
